# EUROPÄISCHE PATENTANMELDUNG

(11) **EP 1 093 942 A1**
(43) Veröffentlichungstag der Anmeldung: **25.04.2001**
(21) Anmeldenummer: 00122425.2
(22) Anmeldetag: 13.10.2000
(51) Int. Cl.: B60G 21/055, F16D 11/04

(54) **Aktuator zum Verbinden von Stabilisatoren**

(30) Priorität: 20.10.1999 DE 19950624
(71) Anmelder: ZF Lenksysteme GmbH, 73527 Schwäbisch Gmünd (DE)
(72) Erfinder: Markowetz, Johannes, 73527 Schwäbisch Gmünd (DE)

(57) **Zusammenfassung**

Aktuator mit mindestens drei Kupplungselementen, die mit Stabilisatoren (3, 5) verbunden sind und Kupplungsprofile (4, 16, 17) aufweisen, wobei ein Kupplungselement (10) axial verschiebbar und durch eine Feder (11) vorgespannt ist, während die anderen Kuppplungselemente fest mit den Stabilisatoren verbunden sind und einem Druckraum (12), dessen Innendruck den Auskuppelvorgang regelt.

## Beschreibung

Die Erfindung betrifft einen Aktuator nach der im Oberbegriff von Anspruch 1 näher definierten Art.

In der EP 344 183 B1 ist ein Aktuator in Form einer formschlüssigen Wellenkupplung beschrieben, bei der ein schnelles Ein- bzw. Auskuppeln zweier Wellenteile dadurch ermöglicht wird, daß mindestens eine der beiden Kupplungshälften mit Mitnehmern ausgestattet ist, die in Aussparungen der anderen Kupplungshälfte oder eines damit verbundenen Teils eingreifen und die relative Lage der Mitnehmer in zwei Schaltstellungen veränderbar ist, so daß verschiedene Drehwinkel zwischen den zu kuppelnden Wellenteilen einstellbar sind. Die Kupplungshälften weisen am Umfang verteilt Mitnehmer in Form von Mitnahmebolzen auf, die Rollen tragen. Diese greifen in als Führungsnuten ausgebildete Aussparungen einer Kupplungsmuffe ein.

Nachteilig wirkt sich an dem Stand der Technik, wie er in der EP 344 183 B1 beschrieben ist, die Tatsache aus, daß man aufgrund des Konstruktionsprinzips mit den am Umfang verteilten Mitnehmern einen großen radialen Einbauraum benötigt, was vor allem die Bodenfreiheit bei Off-Road-Fahrzeugen einschränkt und daß durch die Vielzahl an kleineren Bauteilen eine hohe Schmutzempfindlichkeit gegeben ist, die die Funktion beeinträchtigen kann.

Der vorliegenden Erfindung liegt die Aufgabe zugrunde, einen Aktuator darzustellen, der aufgrund seiner geringen radialen Erstreckung die Bodenfreiheit von Kraftfahrzeugen nicht einschränkt und dennoch große Drehmomente übertragen kann und starke Verschränkungen zuläßt.

Diese Aufgabe wird durch einen, auch die kennzeichnenden Merkmale des Hauptanspruchs aufweisenden, gattungsgemäßen Aktuator gelöst.

Durch die, vor allein in radialer Richtung, kompakte Bauweise und die reduzierte Anzahl von störanfälligen und schmutzempfindlichen Bauteilen ist der erfindungsgemäße Aktuator besonders für den Einbau in Fahrzeugen geeignet, die in schwerem Gelände eingesetzt werden. Durch Integrieren von Mitnahme und vorspannender Feder in einem Gehäuse kann Bauraum und Bauteilvielfalt reduziert werden.

Ein ringförmiges Kupplungselement mit einer innenliegenden Mitnahme, die vorzugsweise als Innenverzahnung ausgebildet ist, bildet einen Gehäuseboden und ist mit einem Stabilisator verbunden. Ein zweites ringförmiges Kupplungselement weist eine außenliegende Mitnahme auf, die mit einem anderen Stabilisator verbunden ist. Ein drittes Kupplungselement ist vorzugsweise als axial verschiebbarer Kolben mit an die beiden anderen Kupplungselemente angepaßter Verzahnungskontur ausgebildet. Durch das Zusammenwirken der drei Kupplungsteile kann auf kleinem Bauraum eine sehr stabile Konstruktion dargestellt werden. Die Kupplungsprofile der einzelnen Kupplungselemente können auf den einzelnen Anwendungsfall angepaßt werden. Sie können beispielsweise als Verzahnungen oder Wellen/Naben-Verbindungen ausgebildet sein.
Weiterhin wird die wirksame Torsionslänge des Aktuators durch den kompakten Aufbau nicht eingeschränkt, was eine große Verschränkung zuläßt. Dies wird vor allem durch einen, durch den Aktuator hindurch gehenden Stabilisator ermöglicht. Um eine teure Oberflächenbearbeitung des Stabilisators zu umgehen und eine optimale Lebensdauer des Bauteiles zu ermöglichen, kann ein Gehäusedeckel über eine Gleitlagerbuchse mit dem Stabilisator verbunden werden. Die Gleitlagerbuchse ist auf Stabi befestigt. Somit kann auf eine teure Bearbeitung des Stabilisators verzichtet werden. In das als Kolben ausgebildete Kupplungselement kann eine Endabschaltung integriert werden, die mechanisch, elektrisch oder hydraulisch arbeiten kann. Desweiteren kann eine Ventilfunktion in dem als Kolben ausgebildeten Kupplungselement integriert sein.

Vorteilhafte und zweckmäßige Ausgestaltungen der Erfindung sind in den Unteransprüchen angegeben. Die Erfindung ist aber nicht auf die Merkmalskombinationen der Ansprüche beschränkt, vielmehr ergeben sich für den Fachmann weitere sinnvolle Kombinationsmöglichkeiten von Ansprüchen und einzelnen Anspruchsmerkmalen aus der Aufgabenstellung.

Nachfolgend sind anhand der Zeichnungen verschiedene Ausführungsbeispiele der vorliegenden Erfindung prinzipgemäß beschrieben. Es zeigen:
- Fig. 1: ein konstruktives Ausführungsbeispiel eines erfindungsgemäßen Aktuators und
- Fig. 2 und 3: Anwendungsbeispiele eines erfindungsgemäßen Aktuators.

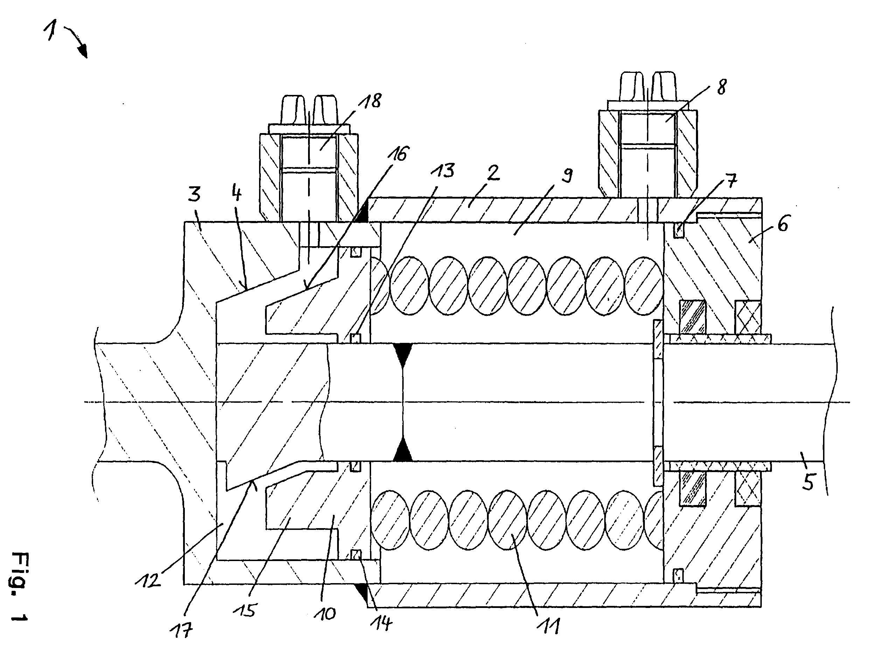

In der Fig. 1 ist der konstruktive Aufbau eines erfindungsgemäßen Aktuators 1 dargestellt. Ein Gehäuse 2 ist fest verbunden mit einem Stabilisator 3. Das Gehäuse 2 weist ein Kupplungsprofil 4 auf, das auf den jeweiligen Anwendungsfall angepaßt werden kann. Ein zweiter Stabilisator 5 ist verschiebbar in einem Gehäusedeckel 6 gelagert und mit einer Dichtung 7 versehen, welche den durch einen Anschluß 8 eingebrachten Betätigungsdruck in einem Druckraum 9 einschließt.
Ein als Kolben ausgebildetes Kupplungselement 10 wird durch eine Feder 11 entgegen dem in einem Druckraum 12 wirkenden Druck belastet, d.h. bei erhöhter Druckkraft in dem Druckraum 12 findet ein Auskuppelvorgang statt. Bei einer niedrigen Druck-, aber einer hohen Federkraft wird eingekuppelt. Das als Kolben ausgebildete Kupplungselement 10 weist an seinen Laufflächen Dichtungen 13 und 14 auf, die die Druckräume 9 und 12 voneinander trennen. Das Kupplungselement 10 weist einen Fortsatz mit einem Kupplungsprofil 16 auf, das mit dem Kupplungsprofil 4 zusammenwirkt. Auf dem Stabilisator 5 ist ein weiteres Kupplungsprofil 17 angeordnet, das mit den Kupplungsprofilen 4 und 16 in Wirkverbindung steht. Über einen Anschluß 18 kann der Druckraum 12 druckbeaufschlagt werden, sodaß die Kupplungsprofile 4, 16 und 17 **ei**nen einstellbaren Schwenkbereich zulassen und die Stabilisatoren 3 und 5 gegeneinander verdreht werden können.

Durch eine Reduzierung der Durchmesser der Anschlüsse 8 bzw. 18 kann zusätzlich eine hydraulische Dämpfung durch den erfindungsgemäßen Aktuator 22 dargestellt werden.

Die Kupplungsprofile 4,16 und 17 überlappen sich immer im ausgekuppelten Zustand axial, sodaß die Stabilisatoren 3 und 5 bei einem Druckabbau automatisch eingekuppelt werden.

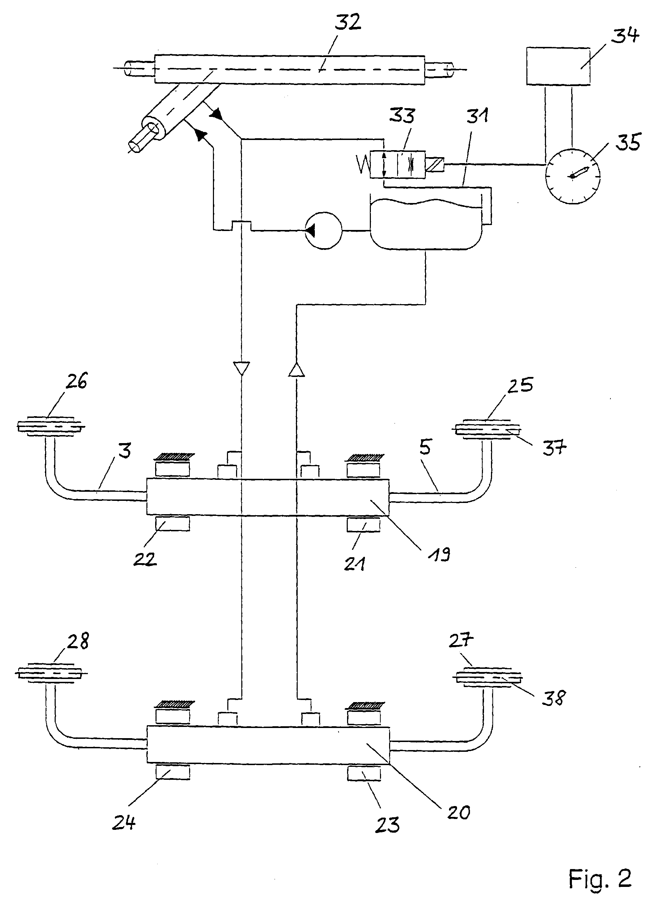

Fig. 2 zeigt einen Anwendungsfall von erfindungsgemäßen Aktuatoren 19 und 20 mit einem zugehörigen Energieversorgungs- und Steuerungssystem.

Am nicht dargestellten Fahrzeugboden eines mehrachsigen Fahrzeuges sind erfindungsgemäße Aktuatoren 19 und 20 in Schwenklagern 21, 22, 23 und 24 gelagert. An den äußeren Enden der baugleichen Stabilisatoren 3 und 5 sind weitere Schwenklager 25, 26, 27 und 28 angebracht, welche die Stabilisatoren 3 und 5 auch axial an Fahrzeugachsen 29 bzw. 30 fixieren.

Der für den Auskuppelvorgang der Aktuatoren 19 und 20 erforderliche Druck wird durch ein in eine Rücklaufleitung 31 eines Lenksystems 32 eingebautes, elektromagnetisch betätigbares Steuerventil 33 erzeugt. Die Betätigung des Steuerventiles 33 erfolgt im niedrigen Geschwindigkeitsbereich für die Fälle, wenn das Fahrzeug in schwierigem Gelände über steife Stabilisatoren große Wankbewegungen ausführen würde. Das Auskuppeln kann automatisch von einer elektronischen Steuereinheit 34 über ein von einem Tachometer 35 gelieferten Geschwindigkeitssignal geschwindigkeitsabhängig erfolgen oder manuell über einen nicht dargestellten Schalter aktiviert werden. Das Einkuppeln sollte jedoch aus Sicherheitsgründen beim Auftreten von höheren Querbeschleunigungen und in Abhängigkeit von einer Grenzgeschwindigkeit automatisch erfolgen.

Das Steuerventil 33 ist vorteilhaft so geschaltet, daß die Kraftkopplung an den Aktuatoren 19 und 20, d.h. das Einkuppeln der Kupplungsprofile 4, 16 und 17, bei Ausfall der Elektrik automatisch erfolgt. Dies ist erforderlich um bei höheren Geschwindigkeiten und Querbeschleunigungen die Wankwinkel zu begrenzen.
Da das Fahren in schwerem Gelände mit niedrigen Geschwindigkeiten und ausgekuppelten Aktuatoren 19 und 20 nur einen sehr geringen zeitlichen Anteil an der Fahrzeugnutzung ausmacht, ist es besonders vorteilhaft zur Energieversorgung die Ölhydraulik des Lenksystems 32 zu benutzen.

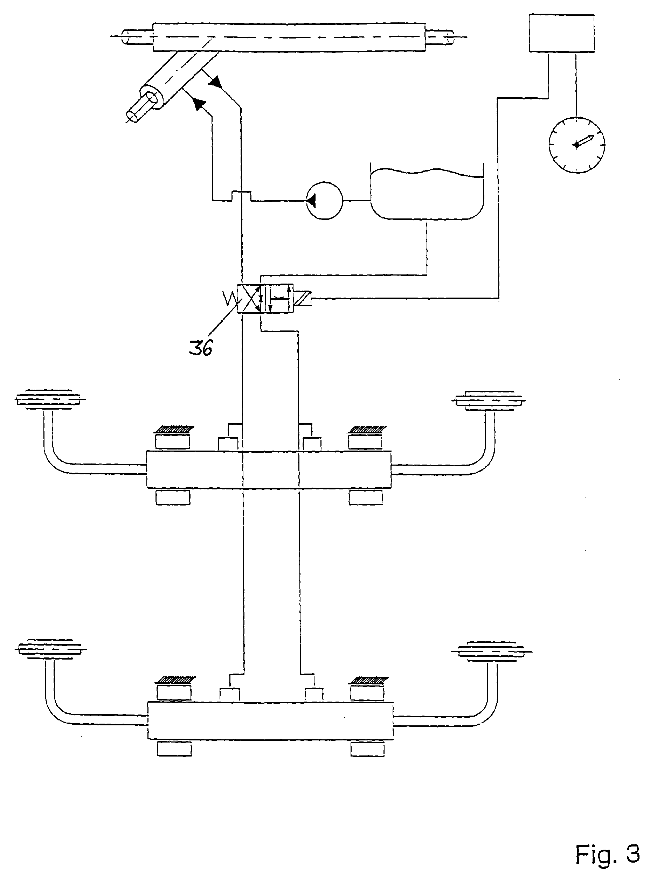

Das in Fig. 3 dargestellte Anwendungsbeispiel zeichnet sich durch eine alternative Ansteuerung der erfindungsgemäßen Aktuatoren 19 und 20 aus.
Durch ein Steuerventil 36 wird die Hydraulik des Lenksystems 32 bei sehr hohen Aktuatorkräften zur Unterstützung der Feder 11 beim Einkuppelvorgang herangezogen.

### Bezugszeichen

- 1: Aktuator
- 2: Gehäuse
- 3: Stabilisator
- 4: Kupplungsprofil
- 5: Stabilisator
- 6: Gehäusedeckel
- 7: Dichtung
- 8: Anschluß
- 9: Druckraum
- 10: Kupplungselement
- 11: Feder
- 12: Druckraum
- 13: Dichtung
- 14: Dichtung
- 15: Fortsatz
- 16: Kupplungsprofil
- 17: Kupplungsprofil
- 18: Anschluß
- 19: Aktuator
- 20: Aktuator
- 21: Schwenklager
- 22: Schwenklager
- 23: Schwenklager
- 24: Schwenklager
- 25: Schwenklager
- 26: Schwenklager
- 27: Schwenklager
- 28: Schwenklager
- 29: Fahrzeugachse
- 30: Fahrzeugachse
- 31: Rücklaufleitung
- 32: Lenksystem
- 33: Steuerventil
- 34: Steuereinheit
- 35: Tachometer
- 36: Steuerventil

## Patentansprüche

1. Aktuator (1) mit mindestens drei, Kupplungsprofile (4, 16, 17 ) aufweisenden, Kupplungselementen, die mit Stabilisatoren (3, 5) in Wirkverbindung stehen, und einem, zwischen den Kupplungsteilen liegenden Druckraum (12), dessen Innendruck den Kupplungsvorgang so regelt, daß bei hohen Drücken im Druckraum (12) ausgekuppelt wird und bei niedrigen Drücken im Druckraum (12) durch die Kraft der Feder () eingekuppelt wird, dadurch gekennzeichnet, daß ein Kupplungselement (10) mit einem Kupplungsprofil (16) axial verschiebbar und durch eine Feder (11) vorgespannt ist, ein zweites Kupplungsprofil (4) fest mit dem Stabilisator (3) verbunden ist und ein drittes Kupplungsprofil (17) mit dem Stabilisator (5) verbunden ist.

2. Aktuator nach Anspruch 1, dadurch **gekennzeichnet,** daß die Kupplungselemente Kupplungsprofile (4, 16, 17) aufweisen, die kurvenfömig, als v-förmige Nuten oder kegelige Verzahnungen ausgebildet sind.

3. Aktuator nach Anspruch 2, dadurch **gekennzeichnet,** daß die Kupplungsprofile (4, 16, 17) radial verlängert immer auf die Mittelachse des Aktuators (1) gerichtet sind.

4. Aktuator nach Anspruch 1, dadurch **gekennzeichnet,** daß die Feder (11) eine Luftfeder oder hydraulische Feder ist.

5. Aktuator nach Anspruch 1, dadurch **gekennzeichnet,** daß die Feder (11) so dimensioniert ist, daß im eingekuppelten Zustand, im Zusammenhang mit einem zur Selbsthemmung ausgelegten Kupplungswinkel der Kupplungsprofile (4, 16, 17), ein Auskuppeln unter auftretenden Wankkräften vermieden werden kann.

6. Verwendung von mindestens einem erfindungsgemäßen Aktuator (19) zur Wankstabilisierung von Kraftfahrzeugen, der nach einem der vorhergehenden Ansprüche ausgebildet, in dem Fahrzeugboden eines Fahrzeuges eingebaut und über Stabilisatoren (3, 5) und Schwenklager (21, 22, 26, 27) mit mindestens einer Fahrzeugachse (29) verbunden ist, der den für das Auskuppeln benötigten Druck durch ein in eine Rücklaufleitung (31) eines Lenksystem (32) eingebautes, elektromagnetisch betätigtes Steuerventil (33) erhält.

7. Verwendung von mindestens einem Aktuator (19), in dem Fahrzeugboden eines Fahrzeuges eingebaut und über Stabilisatoren (3, 5) und Schwenklager (21, 22, 26, 27) mit mindestens einer Fahrzeugachse (29) verbunden ist, der den für das Ein- und Auskuppeln benötigten Druck durch ein in eine Rücklaufleitung (31) eines Lenksystem (32) eingebautes, elektromagnetisch betätigtes Steuerventil (33) erhält.

8. Verwendung nach Anspruch 6 und 7, dadurch **gekennzeichnet,** daß zum Einkuppeln die Betätigung des Steuerventiles (36) automatisch von einer elektronischen Steuereinheit (34) über ein von einem Tachometer (35) gelieferten Geschwindigkeitssignal geschwindigkeitsabhängig erfolgt.

9. Verwendung nach Anspruch 6 und 7 dadurch **gekennzeichnet,** daß zum Einkuppeln ein Steuerventil verwendet wird, welches nach Beendigung des Einkuppelvorganges drucklos geschaltet wird.

10. Verwendung nach Anspruch 7 und 8, dadurch **gekennzeichnet,** daß zur Energieversorgung der Aktuatoren (19, 20) die Druckversorgung des Lenksystems(32) benutzt wird.

11. Verwendung von mindestens einem erfindungsgemäßen Aktuator zur Wankstabilisierung von Kraftfahrzeugen, der nach einem der Ansprüche 1 bis 6 ausgebildet ist, in einem Kraftfahrzeug, der durch eine von einem Elektromotor angetriebene Pumpe über Druckschalter gesteuert wird.

12. Verwendung von mindestens einem erfindungsgemäßen Aktuator zur Wankstabilisierung von Kraftfahrzeugen, der nach einem der Ansprüche 1 bis 5 ausgebildet ist, in einem Kraftfahrzeug, der als Federdruckspeicher verwendet wird um Leckagen auszugleichen, damit die Funktionalität des Aktuators erhalten bleibt.
